# FASCICULE DE BREVET EUROPEEN

(11) **EP 3 161 313 B1**
(45) Date de publication et mention de la délivrance du brevet: **06.03.2019**
(21) Numéro de dépôt: 15732692.7
(22) Date de dépôt: 30.06.2015
(51) Int. Cl.: F04B 7/00, F04B 13/00, F04B 49/06, F04B 51/00

(54) **POMPE VOLUMÉTRIQUE À PISTON ET PROCÉDÉ DE CONTRÔLE DE DÉBIT ASSOCIÉ**
VERDRÄNGUNGSKOLBENPUMPE UND ZUGEHÖRIGES AUSGABESTEUERUNGSVERFAHREN
POSITIVE-DISPLACEMENT PISTON PUMP AND ASSOCIATED DELIVERY CONTROL METHOD

(30) Priorité: 30.06.2014 FR 1456213
(43) Date de publication de la demande: 03.05.2017
(73) Titulaire: Compagnie Générale des Etablissements Michelin, 63000 Clermont-Ferrand (FR)
(72) Inventeur: TOURNEBIZE, Aurélien, F-63040 Clermont-Ferrand Cedex 09 (FR); ANNET, Pierre, F-63040 Clermont-Ferrand Cedex 09 (FR); PIERRE, Christophe, F-63040 Clermont-Ferrand Cedex 09 (FR)
(74) Mandataire: Redouté, Gilles Pierre
(86) Numéro de dépôt international: PCT/EP2015/064776
(87) Numéro de publication internationale: WO 2016/001186

(56) Documents cités:
- WO-A1-2006/108606
- WO-A1-2012/046162
- DE-A1-102012 102 274
- FR-A1- 2 911 374
- US-A1- 2004 167 738
- VETTER G ET AL: "MESSENDE OSZILLIERENDE DOSIERPUMPEN", WAGEN UND DOSIEREN, VERLAGSGESELLSCHAFT KEPPLER, MAINZ, DE, vol. 27, no. 1, 1 février 1996 (1996-02-01), pages 3-09, XP000558397, ISSN: 0342-5916

## Description

La présente invention concerne le domaine des pompes volumétriques à piston, et plus particulièrement un procédé de contrôle de débit d'une telle pompe.

Une application intéressante concerne l'alimentation en gomme de caoutchouc d'une extrudeuse destinée à former un profilé pour la fabrication d'un pneumatique de véhicule.

Classiquement, une pompe volumétrique comprend un piston de dosage de produit monté de façon coulissante dans un cylindre du corps de pompe formant chambre de dosage entre un point mort haut et un point mort bas, et des moyens d'actionnement du piston par exemple une came en contact avec une extrémité de celui-ci.

Un type de pompe volumétrique comprend un cylindre monté coulissant par rapport à un fourreau du corps de pompe pour mettre en communication la chambre de dosage alternativement avec une chambre d'admission et une chambre d'échappement du fourreau, par l'intermédiaire de deux orifices prévus dans l'épaisseur dudit fourreau et spécifiques chacun à l'admission ou à l'échappement du produit. Le cylindre de la pompe comprend des clapets d'entrée et de sortie pouvant obturer respectivement les orifices d'admission et d'échappement. Pour plus de détails sur une pompe de ce type, on pourra par exemple se référer à la demande de brevet FR-A1-2 668 206.

Un autre type de pompe volumétrique comprend un boisseau de distribution monté rotatif à l'intérieur du fourreau du corps de pompe pour mettre en communication la chambre de dosage alternativement avec la chambre d'admission et la chambre d'échappement, par l'intermédiaire d'un unique orifice prévu dans l'épaisseur du fourreau.

A cet effet, des premier et second groupes de rainures sont ménagés sur la surface extérieure du boisseau et agencés de sorte à défiler devant l'orifice du fourreau lors de la rotation du boisseau afin de mettre en communication de façon successive la chambre de dosage avec la chambre d'admission puis avec la chambre d'échappement.

Ainsi, le produit pompé circule de la chambre d'admission vers la chambre de dosage, puis de cette chambre de dosage vers la chambre d'échappement en passant par le même orifice. Pour plus de détails sur une pompe de ce type, on pourra par exemple se référer à la demande de brevet EP-A1-0 604 888.

Avec de telles pompes volumétriques à dosage continu, le piston est déplacé de son point mort haut vers son point mort bas uniquement sous l'effet de la pression du produit qui circule vers la chambre de dosage. Un défaut de pression du produit dans la chambre d'admission peut donc entraîner un défaut de remplissage de la chambre de dosage. Le débit de la pompe peut ainsi être irrégulier.

De sorte à contrôler la régularité du débit de la pompe, la demande de brevet FR-A1-2 911 374 décrit un procédé dans lequel un contact électrique entre la came d'actionnement du piston de dosage et ledit piston doit être détecté dans un délai prédéterminé s'écoulant à compter d'une position de référence de la came.

Si la pression du produit est trop faible lors de la phase d'admission, le piston n'atteint pas le point mort bas et le contact électrique est détecté hors du délai prédéterminé. Au contraire, si la pression du produit est suffisamment élevée lors de cette phase d'admission, le piston atteint le point mort bas et le contact électrique est détecté dans le délai prédéterminé. Dans ce cas, le débit d'échappement de la pompe est considéré comme étant régulier.

Toutefois, pour des vitesses élevées du piston et du moyen de distribution, le contact électrique entre la came et le piston peut être obtenu en dehors de ce délai prédéterminé, par exemple compte tenu de l'inertie du piston et de la viscoélasticité du produit à doser, alors que la chambre de dosage est correctement remplie. Par ailleurs, un tel procédé de contrôle n'est pas applicable lorsque le produit à doser est conducteur électriquement.

La présente invention vise à remédier à ces inconvénients.

Plus particulièrement, la présente invention vise à prévoir un procédé de contrôle de débit d'une pompe qui permet de vérifier de façon sûre le remplissage de la chambre de dosage de ladite pompe et qui soit applicable à la fois pour des produits à doser isolant et conducteur électriquement.

Dans un mode de mise en oeuvre, le procédé de contrôle de débit d'une pompe volumétrique du type comprenant une chambre de dosage de produit, un piston de dosage monté de façon coulissante à l'intérieur de ladite chambre entre un point mort haut et un point mort bas, une chambre d'admission et une chambre d'échappement dudit produit mises alternativement en communication avec ladite chambre de dosage, comprend les étapes au cours desquelles on mesure la pression du produit à l'intérieur de la chambre de dosage pendant au moins un cycle de pompage, et on vérifie la présence d'un pic de pression présentant une valeur supérieure ou égale à une valeur seuil de pression prédéterminée pendant une phase de compression dudit cycle de pompage durant laquelle la chambre de dosage est fermée pour ne pas communiquer avec les chambres d'admission et d'échappement et durant laquelle le piston de dosage se déplace vers le point mort haut.

Pendant la phase de compression du produit, la chambre de dosage est complètement fermée et ainsi isolée de la chambre d'admission et de la chambre d'échappement. La détection d'un tel pic de pression durant cette phase permet de garantir le remplissage correct de la chambre de dosage. En effet, la valeur seuil de pression de contrôle est choisie en fonction du volume de remplissage minimum souhaité de la chambre de dosage. La vérification de la présence d'un pic de pression présentant une valeur de pression supérieure ou égale à la valeur seuil prédéterminée garantit que le volume de produit souhaité est injecté dans la chambre d'échappement.

Si la quantité de produit admis dans la chambre est trop faible, le pic de pression créé présente une valeur de pression inférieure à la valeur seuil. Ceci permet de pouvoir détecter une irrégularité du débit de la pompe. Le pic de pression créé lors de la phase de compression spécialement prévue dans ce but est fonction de l'état de compression du produit à l'intérieur de la chambre de dosage et donc du volume de produit présent.

Dans un mode de mise en oeuvre préféré, on mesure la pression du produit à l'intérieur de la chambre de dosage pendant une pluralité de cycles de pompage successifs, et on vérifie la présence de pics de pression pendant la phase de compression de chacun desdits cycles.

Selon une caractéristique optionnelle du procédé, on émet une alerte lorsque le rapport entre le nombre de pics de pression détectés et le nombre de cycles de pompage est inférieur à une valeur seuil d'alerte prédéterminée.

Ladite valeur seuil de pression peut avantageusement être définie selon le débit de ladite pompe et le type de produit pompé.

La présente invention concerne également une pompe volumétrique comprenant une chambre de dosage de produit, un piston de dosage monté de façon coulissante à l'intérieur de ladite chambre entre un point mort haut et un point mort bas, un fourreau délimitant au moins en partie une chambre d'admission et une chambre d'échappement dudit produit, et un moyen de distribution du produit monté mobile par rapport au fourreau et apte à mettre en communication la chambre de dosage alternativement avec la chambre d'admission et la chambre d'échappement.

Le moyen de distribution est conçu pour permettre d'obtenir en fonctionnement la mise en communication de la chambre de dosage alternativement avec la chambre d'admission et la chambre d'échappement, et une isolation temporaire de ladite chambre de dosage de toute communication avec lesdites chambres d'admission et d'échappement.

La pompe comprend en outre un moyen de mesure de la pression du produit à l'intérieur de la chambre de dosage, et une unité de contrôle reliée au moyen de mesure et apte à vérifier la présence de pics de pression présentant une valeur supérieure ou égale à une valeur seuil de pression prédéterminée pendant des phases de compression durant lesquelles la chambre de dosage est isolée temporairement des chambres d'admission et d'échappement et le piston se déplace vers le point mort haut.

De préférence, le moyen de mesure est apte à mesurer la pression du produit dans une zone de la chambre de dosage située au-delà du point mort haut du piston de dosage.

Dans un mode de réalisation, une partie active du moyen de mesure est montée dans un orifice ménagé dans l'épaisseur d'un cylindre de ladite pompe délimitant la chambre de dosage. En variante, la partie active du moyen de mesure peut être montée à l'intérieur de la chambre de dosage.

De préférence, l'unité de contrôle comprend des moyens logiciels aptes à calculer le rapport entre le nombre de pics de pression détectés et le nombre de cycles de pompage effectués, et aptes à déclencher une alerte lorsque ce rapport est inférieur à une valeur seuil d'alerte prédéterminée.

Dans un mode de réalisation, le moyen de distribution est monté mobile à rotation à l'intérieur du fourreau et comprend des rainures agencées pour permettre d'obtenir la mise en communication de la chambre de dosage alternativement avec la chambre d'admission et la chambre d'échappement, et l'isolation temporaire de ladite chambre de dosage de toute communication avec lesdites chambres d'admission et d'échappement.

La présente invention sera mieux comprise à la lecture de la description détaillée d'un mode de réalisation pris à titre d'exemple nullement limitatif et illustré par les dessins annexés sur lesquels :
- la figure 1 est une vue schématique partielle en coupe d'une pompe volumétrique selon un exemple de réalisation de l'invention dans une position d'admission du produit,
- la figure 2 est une vue schématique partielle en coupe de la pompe de la figure 1 dans une position d'échappement dudit produit, et
- les figures 3 et 4 sont des courbes représentant l'évolution de la pression du produit dosé mesurée à l'intérieur d'une chambre de dosage de la pompe des figures 1 et 2 respectivement au cours de plusieurs cycles de pompage successifs et au cours d'un seul cycle.

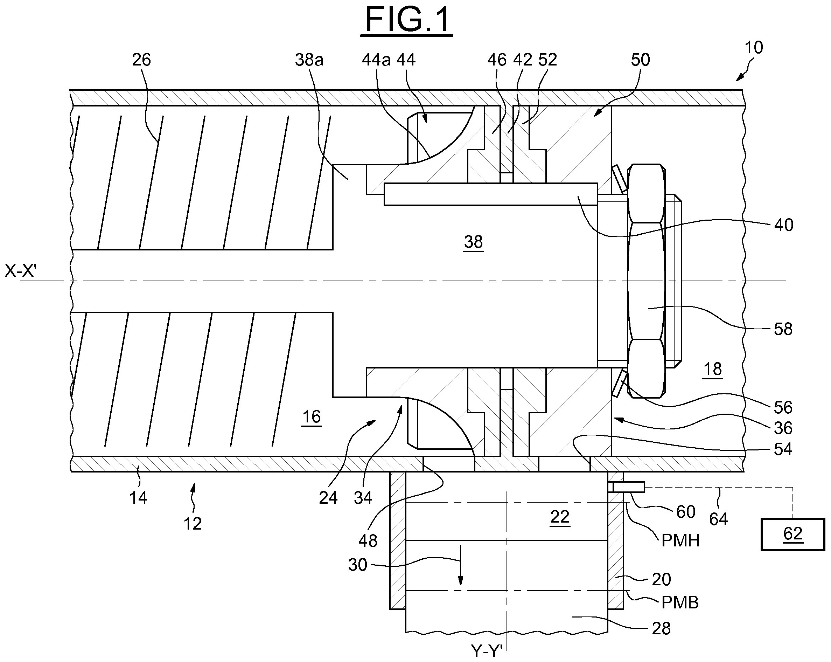

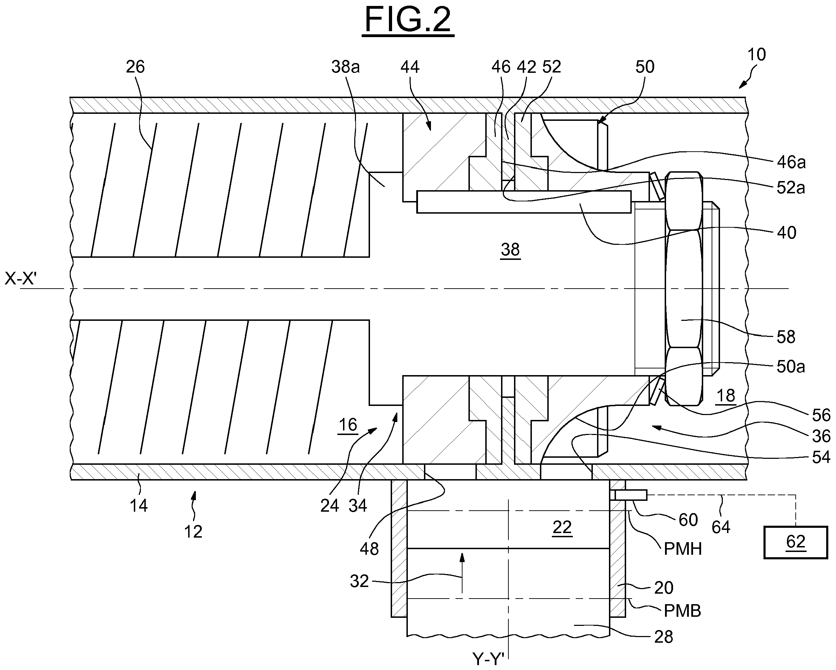

Sur les figures 1 et 2, on a représenté un exemple de réalisation d'une pompe volumétrique, référencée 10 dans son ensemble, prévue pour la distribution d'un produit visqueux, tel qu'un élastomère pouvant être du caoutchouc non vulcanisé.

La pompe 10 comprend un corps de pompe 12 pourvu d'un fourreau 14 délimitant une chambre d'admission 16 et une chambre d'échappement 18, et d'un cylindre 20 délimitant une chambre de dosage 22. Le fourreau 14 présente un axe X-X' d'allongement et le cylindre 20 présente un axe Y-Y' d'allongement orthogonal à l'axe X-X'. Le cylindre 20 est fixé sur le fourreau 14. Dans l'exemple de réalisation illustré, la chambre de dosage 22 est décalée radialement vers l'extérieur par rapport aux chambres d'admission 16 et d'échappement 18. Dans l'ensemble de la description, les termes « axial, radial et circonférentiel » sont définis en considérant l'axe X-X'.

La pompe 10 comprend également un moyen de distribution 24 du produit qui est monté mobile à rotation à l'intérieur du fourreau 14 autour de l'axe X-X' et conçu pour mettre alternativement en communication la chambre de dosage 22 avec la chambre d'admission 16 et la chambre d'échappement 18 par l'intermédiaire de deux organes distincts. Les chambres d'admission 16 et d'échappement 18 sont séparées l'une de l'autre par le moyen de distribution 24.

Dans l'exemple de réalisation illustré, la pompe 10 comprend en outre une vis 26 de gavage du type sans fin disposée dans la chambre d'admission 16 et permettant d'assurer un déplacement du produit depuis un orifice d'introduction (non représenté) de la chambre en direction du moyen de distribution 24 et de mettre sous pression le produit pompé. Le moyen de distribution 24 est solidaire de la vis 26 et l'axe X-X' dudit moyen est confondu avec celui de la vis. En variante, il est possible de prévoir un autre moyen de gavage pour obtenir le transfert mécanique forcé du produit vers le moyen de distribution 24 contre lequel ledit produit est plaqué sous pression.

La pompe 10 comprend encore un piston 28 de dosage du produit qui est monté coulissant le long de l'axe Y-Y' à l'intérieur de la chambre de dosage 22. Le mouvement coulissant du piston 28 de dosage est perpendiculaire à l'axe X-X' de rotation du moyen de distribution 24. Le piston 28 est monté coulissant entre des positions de volume maximum et minimum de la chambre de dosage 22 qui correspondent respectivement à des points mort bas PMB et haut PMH dudit piston. Sur les figures 1 et 2, les points morts haut et bas illustrés schématiquement en pointillés.

Lors d'une phase d'admission du cycle de pompage qui est illustrée à la figure 1, sous l'effet de la pression du produit qui est distribué par le moyen de distribution 24 depuis la chambre d'admission 16 vers la chambre de dosage 22, le piston 28 se déplace du point mort haut PMH vers le point mort bas PMB. Ce déplacement vers le point mort bas est illustré schématiquement par la flèche référencée 30. Comme cela sera décrit plus en détail par la suite, la pompe 10 comprend des moyens permettant de s'assurer du remplissage correct de la chambre de dosage 22.

Lors d'une phase d'échappement du cycle de pompage illustrée à la figure 2, le piston 28 se déplace vers le point mort haut sous l'effet de moyens d'actionnement (non représentés) de ladite pompe. Ce déplacement vers le point mort haut est représenté par la flèche référencée 32. Les moyens d'actionnement peuvent par exemple comprendre une came montée en contact contre l'extrémité inférieure du piston 28 de dosage.

Dans l'exemple de réalisation illustré, le moyen de distribution 24 comprend un organe 34 d'admission du produit, un organe 36 d'échappement dudit produit espacé axialement dudit organe d'admission, et un arbre 38 de support commun d'axe X-X' sur lequel sont montés lesdits organes. Les organes d'admission et d'échappement 34, 36 annulaires sont solidaires en rotation dudit arbre 38 par l'intermédiaire d'une clavette 40. Les organes d'admission et d'échappement 34, 36 peuvent coulisser axialement sur l'arbre 38 le long de la clavette 40. L'arbre 38 est solidaire de la vis 26 de gavage.

Les organes d'admission et d'échappement 34, 36 sont disposés axialement de part et d'autre d'une cloison 42 interne de séparation du fourreau et viennent axialement en appui contre ladite cloison. La cloison 42, de forme annulaire, sépare axialement la chambre d'admission 16 de la chambre d'échappement 18. La cloison 42 s'étend vers l'intérieur à partir de l'alésage du fourreau. La cloison 42 s'étend radialement jusqu'au voisinage de l'arbre 38 de support en restant radialement à distance de celui-ci. La cloison 42 présente deux faces frontales planes opposées contre chacune desquelles un des organes d'admission et d'échappement 34, 36 vient axialement en appui.

Le moyen de distribution 24 comprend encore une rondelle 56 annulaire montée sur l'arbre 38 et venant axialement en appui contre l'organe 36 d'échappement du côté opposé à la cloison 42 du fourreau, et un écrou 58 venant se visser sur une partie filetée dudit arbre (non référencée) et bloquant axialement la rondelle 56. La rondelle 56 peut par exemple être du type Belleville.

L'organe 34 d'admission est disposé dans la chambre d'admission 16. L'organe 34 d'admission comprend un corps 44 et une bague de friction 46 montée axialement en appui contre ledit corps. Le corps 44 et la bague de friction 46 sont solidaires en rotation de l'arbre 38 par l'intermédiaire de la clavette 40. Le corps 44 est monté axialement en appui contre un épaulement 38a de l'arbre et la bague de friction 46 vient axialement en appui contre la cloison 42 du fourreau. L'épaulement 38a de l'arbre est ici situé à une extrémité axiale de l'arbre et s'étend radialement vers l'extérieur. Le corps 44 de l'organe d'admission comprend une pluralité d'évidements ou rainures 44a formées sur sa surface extérieure et débouchant sur la face frontale dudit corps orientée axialement du côté de la chambre d'admission 16. Les rainures 44a sont espacées les unes par rapport aux autres dans le sens circonférentiel, de préférence de façon régulière.

Lors de la rotation de l'organe 34 d'admission, et plus généralement du moyen de distribution 24, les rainures 44a défilent en regard d'un orifice 48 d'entrée de la chambre de dosage 22. Les rainures 44a assurent la mise en communication fluidique de la chambre de dosage 22 avec la chambre d'admission 16.

L'organe 36 d'échappement présente une conception similaire à celle de l'organe 34 d'admission. L'organe 36 d'échappement est disposé dans la chambre d'échappement 18. L'organe 36 d'échappement comprend un corps 50 et une bague de friction 52 montée axialement en appui contre ledit corps 50. Le corps 50 et la bague de friction 52 sont solidaires en rotation de l'arbre 38 par l'intermédiaire de la clavette 40. La bague de friction 52 est montée axialement en appui contre la cloison 42 du fourreau axialement du côté opposé à l'organe 34 d'admission. Avantageusement, chaque bague de friction 42, 52 est réalisée dans un matériau à coefficient de friction faible et pouvant présenter des propriétés auto-lubrifiantes et une bonne résistance à l'usure, par exemple en bronze, en graphite, etc.

Le corps 50 comprend une pluralité d'évidements ou rainures 50a formées sur sa surface extérieure, débouchant sur la face frontale dudit corps orientée axialement du côté de la chambre d'échappement 18 et espacées les uns par rapport aux autres dans le sens circonférentiel. Lors de la rotation du moyen de distribution 24, les rainures 50a défilent en regard d'un orifice 54 de sortie de la chambre de dosage 22. Les rainures 50a assurent la mise en communication fluidique de la chambre de dosage 22 avec la chambre d'échappement 18.

Dans l'exemple de réalisation illustré, l'orifice 48 d'entrée et l'orifice 54 de sortie sont ménagés dans l'épaisseur du fourreau 14 du corps de pompe et débouchent dans la chambre de dosage 22. Les orifices 48, 54 s'étendent ici radialement dans l'épaisseur du fourreau 14. Les orifices 48, 54 sont situés radialement en regard du piston 26 de dosage et disposés radialement au-delà du point mort haut PMH dudit piston. Les orifices 48, 54 sont situés axialement de part et d'autre de la cloison 42 de séparation, respectivement du côté de la chambre d'admission 16 et de la chambre d'échappement 18.

Les rainures 50a de l'organe d'échappement du moyen de distribution sont disposées relativement aux rainures 44a de l'organe d'admission de sorte que lorsqu'une des rainures 44a vient en regard de l'orifice 48 d'entrée de la chambre de dosage 22, aucune des rainures 50a de l'organe d'échappement n'est positionnée en regard de l'orifice 54 de sortie. Dans cette position d'admission du produit dans la chambre de dosage 22, l'orifice 54 de sortie est obturé par la surface extérieure de l'organe d'échappement comme illustré à la figure 1.

A l'inverse, dans la position d'échappement du produit hors de la chambre de dosage 22, une des rainures 50a vient en regard de l'orifice 54 de sortie et la surface extérieure de l'organe d'admission obture l'orifice 48 d'entrée. Ainsi, le moyen de distribution 24 permet de mettre en communication la chambre de dosage 22 alternativement avec la chambre d'admission 16 et la chambre d'échappement 18.

Les rainures 44a, 50a sont agencées sur les organes d'admission et d'échappement 34, 36 de sorte à éviter toute communication de la chambre de dosage 22 avec la chambre d'admission 16 et la chambre d'échappement 18 lors d'une phase de compression du cycle de pompage. Les orifices d'entrée 48 et de sortie 54 sont obturés par les surfaces extérieures des organes d'admission et d'échappement. Lors de cette phase, la chambre de dosage 22 est isolée temporairement de la chambre d'admission 16 et de la chambre d'échappement 18.

Les rainures 44a, 50a sont agencées sur le moyen de distribution 24 et les mouvements de rotation dudit moyen et de translation du piston 28 sont synchronisés de sorte à obtenir le cycle de pompage illustré dans le tableau qui suit.

| Cycle de pompage | phase d'admission | phase de refoulement | phase de compression | phase d'échappement |
|---|---|---|---|---|
| Etat de l'orifice d'entrée | ouvert | ouvert | fermé | fermé |
| Etat de l'orifice de sortie | fermé | fermé | fermé | ouvert |
| Mouvement du piston de dosage | descente | montée | | |

Dans la phase d'admission, l'orifice 48 d'entrée de la chambre de dosage 22 est ouvert tandis que l'orifice 54 de sortie est fermé. Lors de cette phase d'admission du produit, le piston 28 de dosage se déplace de son point mort haut PMH jusqu'à atteindre son point mort bas PMB.

La phase d'admission est suivie d'une phase de refoulement du produit pendant laquelle les orifices 48 d'entré et de sortie 54 restent dans le même état, à savoir ouvert et fermé respectivement. Lors de cette phase de refoulement, le piston 28 de dosage se déplace à partir du point mort bas PMB vers le point mort haut PMH. La phase de refoulement permet d'assurer un remplissage correct de la chambre de dosage 22.

Le cycle de pompage se poursuit par la phase de compression du produit dans laquelle les orifices 48 d'entré et de sortie 54 sont fermés comme indiqué précédemment. Durant cette phase, le piston 28 de dosage poursuit son déplacement vers le point mort haut PMH et la chambre de dosage 22 est ainsi isolée temporairement de la chambre d'admission 26 et de la chambre d'échappement 18. Toute communication de produit est empêchée entre ces chambres et la chambre de dosage 22.

Ensuite, le cycle se termine par la phase d'échappement du produit dans laquelle l'orifice 48 d'entrée reste fermé tandis que l'orifice 54 de sortie est ouvert. Lors de cette phase, le piston 28 de dosage se déplace jusqu'à atteindre son point mort haut PMH.

Afin de procéder au contrôle du débit de la pompe 10 à la sortie de la chambre 18 d'échappement, ladite pompe comprend un capteur 60 de pression mesurant en permanence la pression du produit à l'intérieur de la chambre de dosage 22, et une unité de contrôle 62 reliée audit capteur par l'intermédiaire d'une connexion 64. Le capteur 60 délivre en continu une information relative à la pression du produit qui est présent dans la chambre de dosage 22. A titre d'exemple, le capteur 60 peut être du type piézo-électrique. L'unité de contrôle 62 peut par exemple être un microcontrôleur.

Dans l'exemple de réalisation illustré, le capteur est monté en partie dans un orifice (non référencé) ménagé dans l'épaisseur du cylindre 20 et débouchant dans la chambre de dosage 22. La partie active du capteur 60 est située à l'intérieur de cet orifice de montage de sorte à pouvoir mesurer la pression du produit situé à l'intérieur de la chambre de dosage 22. La partie active du capteur 60 est située radialement au-delà du point mort haut PMH du piston 28, i.e. radialement entre le point mort haut et les orifices 48, 54. En variante, il est possible de prévoir le montage du capteur 60 de pression fixé contre l'alésage du cylindre 20 au-delà du point mort haut PMH du piston. Dans une autre variante, le capteur 60 peut être fixé sur la face frontale du piston 28. Dans ces deux derniers cas, le capteur 60 est monté à l'intérieur de la chambre de dosage 22.

L'unité de contrôle 62 comprend, stockés en mémoire, tous les moyens matériels et logiciels permettant de mettre en oeuvre les principales étapes du procédé de contrôle du débit de la pompe à partir des mesures de pression du produit qui sont faites par le capteur 60.

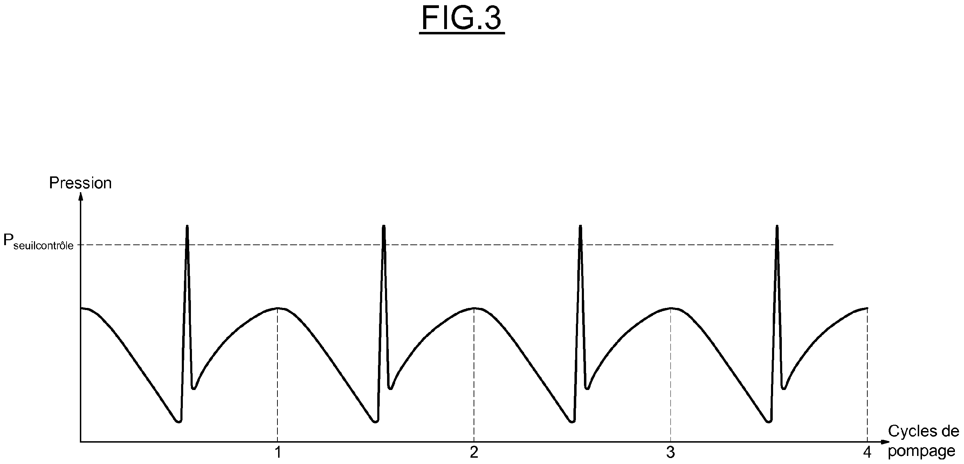

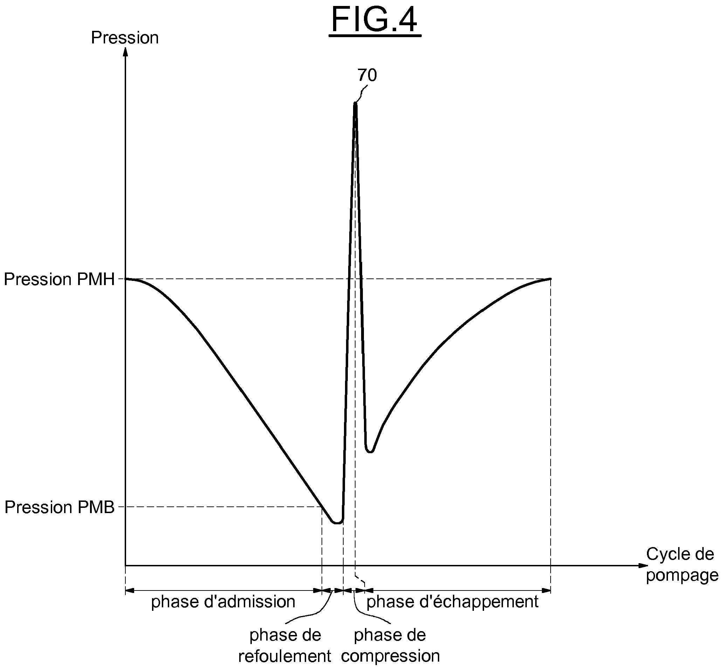

Les valeurs mesurées par le capteur 60 sont délivrées en continue à l'unité de contrôle 62 qui les acquiert de sorte à obtenir la courbe de pression du produit à l'intérieur de la chambre de dosage lors des cycles de pompage successifs comme illustré à la figure 3. Pour des raisons de clarté, l'évolution de la pression du produit qui est mesurée lors des différentes phases de chaque cycle est illustrée à la figure 4.

Au début de la phase d'admission, la pression du produit diminue progressivement dans la chambre de dosage lors du déplacement du piston de dosage à partir de son point mort haut PMH jusqu'à ce qu'il atteigne son point mort bas PMB. Lors de la phase de refoulement successive, la pression du produit continue de chuter.

Ensuite, lors de la phase de compression, un pic de pression 70 du produit est créé et présente une valeur largement supérieure aux valeurs de pression mesurées pendant le reste du cycle de pompage. Ce pic de pression 70 est représentatif de l'état de compression du produit à l'intérieur la chambre de dosage qui dépend de la quantité de produit contenue. En effet, pendant cette phase, le déplacement du piston vers le point mort haut PMH comprime le produit dans la chambre de dosage qui est complètement fermée. Au début de la phase d'échappement suivante, la pression du produit chute brutalement puis augmente à nouveau pendant le déplacement du piston de dosage jusqu'à son point mort haut PMH.

Les moyens logiciels de l'unité de contrôle 62 permettent de vérifier en continu la présence de pics de pression 70 ayant une valeur supérieure ou égale à une valeur seuil de pression de contrôle P_{seuil contrôle} prédéterminée qui illustrée à la figure 3. La présence de tels pics de pression permet de garantir que le volume souhaité de produit a été injecté dans la chambre d'échappement de la pompe lors de la phase d'échappement du cycle de pompage considéré. La valeur seuil P_{seuil contrôle} est une valeur représentative d'un état de remplissage satisfaisant de la chambre de dosage. Cette valeur est définie au préalable selon le type de produit pompé et le débit souhaité de la pompe.

Les moyens logiciels de l'unité de contrôle calculent en continu le rapport entre le nombre de pics de pression détectés et le nombre de cycles de pompage effectués et déclenchent une alerte lorsque ce rapport est inférieur à une valeur seuil d'alerte prédéterminée. L'alerte est par exemple transmise à un opérateur avant l'arrêt de la pompe.

Grâce à l'invention, il est possible de contrôler la régularité du débit de la pompe en détectant la présence de pics de pression à l'intérieur de la chambre de dosage lors de la phase de compression des cycles de pompage qui est spécifiquement prévue dans ce but. La vérification du remplissage satisfaisant de la chambre de dosage garantissant un débit régulier de la pompe est réalisée par des mesures physiques à l'intérieur de celle-ci.

L'invention a été illustrée sur la base d'une pompe volumétrique comprenant un moyen de distribution du produit rotatif qui est conçu de sorte que les fonctions d'admission et d'échappement sont réalisées chacune par un organe spécifique. L'invention peut également être appliquée à une pompe comprenant un moyen de distribution réalisé sous la forme d'un boisseau cylindrique rotatif et comprenant les deux groupes de rainures ménagés sur sa surface extérieure et défilant devant un unique orifice. L'invention peut encore être appliquée à une pompe comprenant un moyen de distribution réalisé sous la forme d'un cylindre coulissant et équipé de clapets d'entrée et de sortie pour obturer respectivement les orifices d'admission et d'échappement de la chambre de dosage.

## Revendications

1. Procédé de contrôle de débit d'une pompe volumétrique comprenant une chambre de dosage de produit, un piston de dosage monté de façon coulissante à l'intérieur de ladite chambre entre un point mort haut et un point mort bas, une chambre d'admission et une chambre d'échappement dudit produit mises alternativement en communication avec ladite chambre de dosage, **caractérisé en ce qu'**il comprend les étapes au cours desquelles :
- on mesure la pression du produit à l'intérieur de la chambre de dosage pendant au moins un cycle de pompage, et
- on vérifie la présence d'un pic de pression présentant une valeur supérieure ou égale à une valeur seuil de pression prédéterminée pendant une phase de compression dudit cycle de pompage durant laquelle la chambre de dosage est fermée pour ne pas communiquer avec les chambres d'admission et d'échappement et durant laquelle le piston de dosage se déplace vers le point mort haut.

2. Procédé selon la revendication 1, dans lequel on mesure la pression du produit à l'intérieur de la chambre de dosage pendant une pluralité de cycles de pompage successifs, et on vérifie la présence de pics de pression pendant la phase de compression de chacun desdits cycles.

3. Procédé selon la revendication 2, dans lequel on émet une alerte lorsque le rapport entre le nombre de pics de pression détectés et le nombre de cycles de pompage est inférieur à une valeur seuil d'alerte prédéterminée.

4. Procédé selon l'une quelconque des revendications précédentes, dans lequel ladite valeur seuil de pression est définie selon le débit de ladite pompe et le type de produit pompé.

5. Pompe volumétrique comprenant une chambre de dosage (22) de produit, un piston de dosage (28) monté de façon coulissante à l'intérieur de ladite chambre entre un point mort haut et un point mort bas, un fourreau (14) délimitant au moins en partie une chambre d'admission (16) et une chambre d'échappement (18) dudit produit, et un moyen de distribution (24) du produit monté mobile par rapport au fourreau et apte à mettre en communication la chambre de dosage alternativement avec la chambre d'admission et la chambre d'échappement, **caractérisée en ce que** le moyen de distribution (24) est conçu pour permettre d'obtenir en fonctionnement la mise en communication de la chambre de dosage (22) alternativement avec la chambre d'admission (16) et la chambre d'échappement (18), et une isolation temporaire de ladite chambre de dosage de toute communication avec lesdites chambres d'admission et d'échappement, et **en ce qu'**elle comprend en outre un moyen de mesure (60) de la pression du produit à l'intérieur de la chambre de dosage (22), et une unité de contrôle (62) reliée au moyen de mesure (60) et apte à vérifier la présence de pics de pression (70) présentant une valeur supérieure ou égale à une valeur seuil de pression prédéterminée pendant des phases de compression durant lesquelles la chambre de dosage est isolée temporairement des chambres d'admission et d'échappement et le piston se déplace vers le point mort haut.

6. Pompe selon la revendication 5, dans laquelle le moyen de mesure (60) est apte à mesurer la pression du produit dans une zone de la chambre de dosage (22) située au-delà du point mort haut du piston de dosage (28).

7. Pompe selon la revendication 5 ou 6, dans laquelle une partie active du moyen de mesure (60) est montée dans un orifice ménagé dans l'épaisseur d'un cylindre (20) de ladite pompe délimitant la chambre de dosage (22).

8. Pompe selon la revendication 5 ou 6, dans laquelle une partie active du moyen de mesure (60) est montée à l'intérieur de la chambre de dosage (22).

9. Pompe selon l'une quelconque des revendications 5 à 8, dans laquelle l'unité de contrôle (62) comprend des moyens logiciels aptes à calculer le rapport entre le nombre de pics de pression (70) détectés et le nombre de cycles de pompage effectués, et à déclencher une alerte lorsque ce rapport est inférieur à une valeur seuil d'alerte prédéterminée.

10. Pompe selon l'une quelconque des revendications 5 à 9, dans laquelle le moyen de distribution (24) est monté mobile à rotation à l'intérieur du fourreau et comprend des rainures (44a, 50a) agencées pour permettre d'obtenir en fonctionnement la mise en communication de la chambre de dosage (22) alternativement avec la chambre d'admission (16) et la chambre d'échappement (18), l'isolation temporaire de ladite chambre de dosage de toute communication avec lesdites chambres d'admission et d'échappement.

## Patentansprüche

1. Verfahren zur Überwachung der Fördermenge einer Verdrängerpumpe, welche eine Produktdosierkammer, einen Dosierkolben, der im Inneren dieser Kammer zwischen einem oberen Totpunkt und einem unteren Totpunkt gleitend gelagert ist, und eine Einlasskammer und eine Auslasskammer für das Produkt, die abwechselnd mit der Dosierkammer verbunden werden, umfasst, **dadurch gekennzeichnet, dass** es die Schritte umfasst, in deren Verlauf:
- der Druck des Produkts im Inneren der Dosierkammer während wenigstens eines Pumpzyklus gemessen wird, und
- das Vorhandensein einer Druckspitze, die einen Wert aufweist, der größer oder gleich einem vorbestimmten Druckschwellenwert ist, während einer Kompressionsphase des Pumpzyklus überprüft wird, in welcher die Dosierkammer geschlossen ist, so dass sie nicht mit der Einlass- und der Auslasskammer in Verbindung steht, und in welcher sich der Dosierkolben in Richtung des oberen Totpunktes bewegt.

2. Verfahren nach Anspruch 1, wobei der Druck des Produkts im Inneren der Dosierkammer während mehrerer aufeinander folgender Pumpzyklen gemessen wird und das Vorhandensein von Druckspitzen während der Kompressionsphase jedes dieser Zyklen überprüft wird.

3. Verfahren nach Anspruch 2, wobei eine Warnmeldung ausgegeben wird, wenn das Verhältnis zwischen der Anzahl erkannter Druckspitzen und der Anzahl der Pumpzyklen kleiner als ein vorbestimmter Alarmschwellenwert ist.

4. Verfahren nach einem der vorhergehenden Ansprüche, wobei der Druckschwellenwert in Abhängigkeit von der Fördermenge der Pumpe und der Art des gepumpten Produkts definiert wird.

5. Verdrängerpumpe, welche eine Produktdosierkammer (22), einen Dosierkolben (28), der im Inneren dieser Kammer zwischen einem oberen Totpunkt und einem unteren Totpunkt gleitend gelagert ist, eine Hülse (14), die wenigstens einen Teil einer Einlasskammer (16) und einer Auslasskammer (18) für das Produkt begrenzt, und ein Mittel zur Verteilung (24) des Produkts, das beweglich bezüglich der Hülse angebracht ist und geeignet ist, die Dosierkammer abwechselnd mit der Einlasskammer und der Auslasskammer in Verbindung zu bringen, umfasst, **dadurch gekennzeichnet, dass** das Verteilungsmittel (24) dafür eingerichtet ist zu ermöglichen, im Betrieb die Herstellung einer Verbindung der Dosierkammer (22) abwechselnd mit der Einlasskammer (16) und der Auslasskammer (18) und eine zeitweilige Isolation der Dosierkammer von jeder Verbindung mit der Einlass- und der Auslasskammer zu bewirken, und dadurch, dass sie außerdem ein Mittel zur Messung (60) des Drucks des Produkts im Inneren der Dosierkammer (22) umfasst, und eine Überwachungseinheit (62), die mit dem Messmittel (60) verbunden ist und geeignet ist, das Vorhandensein von Druckspitzen (70), die einen Wert aufweisen, der größer oder gleich einem vorbestimmten Druckschwellenwert ist, während Kompressionsphasen zu überprüfen, in denen die Dosierkammer zeitweilig von der Einlass- und der Auslasskammer isoliert ist und der Kolben sich in Richtung des oberen Totpunktes bewegt.

6. Pumpe nach Anspruch 5, wobei das Messmittel (60) geeignet ist, den Druck des Produkts in einem Bereich der Dosierkammer (22) zu messen, der sich jenseits des oberen Totpunktes des Dosierkolbens (28) befindet.

7. Pumpe nach Anspruch 5 oder 6, wobei ein aktiver Teil des Messmittels (60) in einer Öffnung angebracht ist, die in der Dicke eines Zylinders (20) der Pumpe ausgebildet ist, der die Dosierkammer (22) begrenzt.

8. Pumpe nach Anspruch 5 oder 6, wobei ein aktiver Teil des Messmittels (60) im Inneren der Dosierkammer (22) angebracht ist.

9. Pumpe nach einem der Ansprüche 5 bis 8, wobei die Überwachungseinheit (62) Softwaremittel umfasst, die in der Lage sind, das Verhältnis zwischen der Anzahl erkannter Druckspitzen (70) und der Anzahl ausgeführter Pumpzyklen zu berechnen und eine Warnmeldung auszulösen, wenn dieses Verhältnis kleiner als ein vorbestimmter Alarmschwellenwert ist.

10. Pumpe nach einem der Ansprüche 5 bis 9, wobei das Verteilungsmittel (24) drehbeweglich im Inneren der Hülse angebracht ist und Hohlkehlen (44a, 50a) umfasst, die dafür ausgelegt sind zu ermöglichen, im Betrieb die Herstellung einer Verbindung der Dosierkammer (22) abwechselnd mit der Einlasskammer (16) und der Auslasskammer (18) und die zeitweilige Isolation der Dosierkammer von jeder Verbindung mit der Einlass- und der Auslasskammer zu bewirken.

## Claims

1. Method for controlling the flow rate of a positive-displacement pump comprising a product metering chamber, a metering piston mounted inside said chamber so as to slide between top dead centre and bottom dead centre, and an intake chamber and an exhaust chamber for said product that are placed alternately in communication with said metering chamber, **characterized in that** it comprises the steps in which:
- the pressure of the product inside the metering chamber is measured during at least one pump cycle, and
- the presence of a pressure peak having a value greater than or equal to a predetermined pressure threshold is verified during a compression phase of said pump cycle, the metering chamber being closed during said compression phase so as not to be in communication with the intake and exhaust chambers, and the metering piston moving towards top dead centre during said compression phase.

2. Method according to Claim 1, wherein the pressure of the product inside the metering chamber is measured during a plurality of successive pump cycles, and the presence of pressure peaks is verified during the compression phase of each of said cycles.

3. Method according to Claim 2, wherein a warning is output if the ratio between the number of pressure peaks detected and the number of pump cycles is less than a predetermined warning threshold.

4. Method according to any one of the preceding claims, wherein said pressure threshold is defined in accordance with the flow rate of said pump and the type of product pumped.

5. Positive-displacement pump comprising a product metering chamber (22), a metering piston (28) mounted inside said chamber so as to slide between top dead centre and bottom dead centre, a sleeve (14) at least partially delimiting an intake chamber (16) and an exhaust chamber (18) for said product, and a product dispensing means (24) that is mounted so as to be able to move with respect to the sleeve and is able to place the metering chamber alternately into communication with the intake chamber and the exhaust chamber, **characterized in that** the dispensing means (24) is designed to make it possible to place the metering chamber (22) alternately into communication with the intake chamber (16) and the exhaust chamber (18) during operation, and to temporarily isolate said metering chamber from any communication with said intake and exhaust chambers, and **in that** it also comprises a means (60) for measuring the pressure of the product inside the metering chamber (22), and a control unit (62) that is connected to the measuring means (60) and is able to verify the presence of pressure peaks (70) exhibiting a value greater than or equal to a predetermined pressure threshold during compression phases in which the metering chamber is temporarily isolated from the intake and exhaust chambers, and the metering piston is moving towards top dead centre.

6. Pump according to Claim 5, wherein the measuring means (60) is able to measure the pressure of the product in a zone of the metering chamber (22) that is situated above top dead centre of the metering piston (28).

7. Pump according to Claim 5 or 6, wherein an active part of the measuring means (60) is mounted in an orifice formed in the thickness of a cylinder (20) of said pump that delimits the metering chamber (22).

8. Pump according to Claim 5 or 6, wherein an active part of the measuring means (60) is mounted inside the metering chamber (22).

9. Pump according to any one of Claims 5 to 8, wherein the control unit (62) comprises software means that are able to calculate the ratio between the number of pressure peaks (70) detected and the number of pump cycles carried out, and to trigger a warning when this ratio is less than a predetermined warning threshold.

10. Pump according to any one of Claims 5 to 9, wherein the dispensing means (24) is mounted so as to be able to rotate inside the sleeve and comprises grooves (44a, 50a) that are designed to make it possible to place the metering chamber (22) alternately into communication with the intake chamber (16) and the exhaust chamber (18) during operation, and to temporarily isolate said metering chamber from any communication with said intake and exhaust chambers.
